# FASCICULE DE BREVET EUROPEEN

(11) **EP 1 044 790 B1**
(45) Date de publication et mention de la délivrance du brevet: **01.09.2004**
(21) Numéro de dépôt: 00401012.0
(22) Date de dépôt: 12.04.2000
(51) Int. Cl.: B29C 70/54

(54) **Procédé de réalisation d'une pièce en matière plastique renforcée par surmoulage d'une feuille, dispositif pour la mise en oeuvre de ce procédé et chaîne de fabrication comprenant ce dispositif**
Verfahren zur Herstellung eines faserverstärkten Kunststoffteils durch Formen eines Bogens, Vorrichtung zur Durchführung dieses Verfahrens und diese Vorrichtung enthaltende Fertigungsstrasse
Method of manufacturing a fibre reinforced plastic part by moulding a sheet, apparatus for performing said method and production line comprising said apparatus

(30) Priorité: 12.04.1999 FR 9904527
(43) Date de publication de la demande: 18.10.2000
(73) Titulaire: COMPAGNIE PLASTIC OMNIUM, 69007 Lyon (FR)
(72) Inventeur: Uytterhaeghe, Luc, 01100 Arbent (FR); Blanchon, Charles-Guillaume, 01100 Oyonnax (FR); Chene, Anthony, 01100 Oyonnax (FR); Charpy, Robert, 01100 Bellignat (FR)
(74) Mandataire: Leszczynski, André

(56) Documents cités:
- EP-A- 0 480 652
- EP-A- 0 588 363
- US-A- 4 961 700

## Description

La présente invention concerne un procédé de réalisation d'une pièce en matière plastique renforcée par surmoulage d'une feuille, un dispositif pour la mise en oeuvre de ce procédé et un ensemble et une chaîne de fabrication comprenant ce dispositif.

Il est déjà connu d'utiliser des feuilles monocouche pour réaliser des pièces en matière plastique présentant une certaine rigidité, notamment pour réaliser des pièces structurelles de véhicules automobiles.

Par exemple, avec le matériau connu sous le nom de TRE (thermoplastique renforcé estampable), qui est du polypropylène renforcé de fibres de verre, le procédé consiste à chauffer des feuilles de TRE puis à les déposer dans un moule ouvert, puis à fermer le moule pour provoquer le fluage de la matière plastique et le remplissage de l'empreinte du moule. Le document EP 480 652 A montre un tel procédé.

Il est également connu d'utiliser des matériaux multicouche obtenus par superposition de feuilles de TRE et de feuilles de TWINTEX (marque déposée de la société VETROTEX), le TWINTEX étant une feuille tissée de fibres de verre et de polypropylène comélées.

Les feuilles de TWINTEX deviennent molles lors du chauffage qui précède la mise en place de l'ensemble dans le moule mais la rigidité des feuilles de TRE est suffisante pour permettre la manipulation du matériau chauffé.

En revanche, lorsqu'il s'agit de surmouler uniquement une ou plusieurs feuilles de TWINTEX, leur mise en place dans un moule soulève des difficultés car les feuilles de TWINTEX chauffées, trop molles, se manipulent difficilement.

Il en résulte que les seuls procédés connus de surmoulage de feuilles de TWINTEX consistent à convoyer les feuilles horizontalement depuis un poste de chauffage jusqu'au moule, ce dernier étant monté sur une presse verticale de manière que sa partie devant recevoir la ou les feuilles de TWINTEX soit horizontale.

Cette difficulté de manipulation des feuilles de TWINTEX chauffées impose donc, comme première limite à leur surmoulage, l'obligation d'utiliser des moules montés sur des presses verticales.

De plus, le convoyage de la feuille de TWINTEX ne procure pas un positionnement suffisamment précis de cette dernière dans le moule. De ce fait, on préfère, par sécurité, découper la feuille de TWINTEX plus grande que nécessaire, pour s'assurer que celle-ci s'étendra sur toute la surface souhaitée de la pièce à réaliser, quitte à reprendre la pièce après son moulage pour découper les bords de la feuille de TWINTEX qui dépassent à sa périphérie.

Une deuxième limite au surmoulage des feuilles de TWINTEX réside donc dans le fait que les pièces ainsi obtenues doivent faire l'objet d'une reprise après moulage.

La présente invention vise à fournir un procédé qui résout tout ou partie des problèmes rappelés ci-dessus.

La présente invention a notamment pour objet un procédé de réalisation, dans un moule en au moins deux parties, d'une pièce en matière plastique renforcée à partir d'une feuille renforcée ou d'un ensemble de feuilles comprenant au moins une feuille renforcée, dans lequel on préchauffe la feuille renforcée, caractérisé par le fait qu'il comprend les étapes suivantes :
- on présente la feuille renforcée ou ledit ensemble de feuilles devant une première partie du moule ouvert au moyen d'un dispositif de préhension comportant des presseurs,
- on applique au moins une région de la feuille renforcée ou dudit ensemble contre une région correspondante de la première partie de moule au moyen de presseurs du dispositif de préhension,
- on applique le reste de sa surface contre le reste de ladite première partie de moule en maintenant immobile ladite région de la feuille ou dudit ensemble,
- on ferme le moule,
- on démoule la pièce ainsi obtenue.

Dans la suite de la description, on appellera partie d'application la partie du moule contre laquelle on applique la feuille renforcée.

Le dispositif de préhension peut être utilisé ou non pour appliquer le reste de la surface de la feuille ou dudit ensemble contre la première partie de moule.

On peut superposer plusieurs feuilles dans le moule, avec éventuellement des renforts locaux pris en sandwich entre les feuilles.

La région précitée de la feuille renforcée ou dudit ensemble peut correspondre à au moins un bord, de préférence aux bords de cette feuille ou dudit ensemble ou en variante, à une zone centrale.

Le procédé selon l'invention a pour avantage essentiel qu'il permet d'automatiser le positionnement de la feuille ou dudit ensemble.

Il peut permettre également de supprimer l'étape de reprise consistant à découper les bords de la feuille ou dudit ensemble dépassant de la pièce obtenue après surmoulage, et ce grâce au fait que les bords de la feuille ou dudit ensemble peuvent être précisément positionnés par rapport au moule. Une fois ce positionnement effectué, on applique le reste de la feuille ou dudit ensemble contre le reste de la première partie du moule.

On tire ainsi profit de l'absence de rigidité de la feuille ou dudit ensemble pour plaquer cette dernière ou ce dernier contre la première partie du moule, sans qu'elle ou il ne déborde à la périphérie du moule.

Dans une mise en oeuvre particulière, les presseurs comprennent des cales rigides montées sur des vérins.

Dans une variante, une cale rigide comprend plusieurs éléments séparés par des inserts gonflables qui les écartent les uns des autres pour faire en sorte que la cale épouse au mieux la forme de la première partie de moule.

Les presseurs peuvent également être constitués par des enveloppes gonflables qui, à l'état gonflé, épousent exactement la forme de la première partie de moule.

Pour son positionnement précis sur la première partie de moule, la feuille ou ledit ensemble est avantageusement retenu(e) par des aiguilles disposées sur le dispositif de préhension.

Lorsque l'on superpose des feuilles et/ou des renforts locaux, de telles aiguilles peuvent avantageusement servir à maintenir en position les différentes couches superposées les unes par rapport aux autres, en étant insérées dans l'ensemble.

De préférence, les aiguilles sont montées sur un même support que les presseurs.

Dans une mise en oeuvre particulière, les aiguilles sont sensiblement parallèles à la direction de fermeture du moule.

De préférence, certaines aiguilles peuvent être aptes à se déplacer latéralement pour suivre les déformations de la feuille ou dudit ensemble, lorsque cette dernière ou ce dernier adapte sa surface à la surface réelle de la première partie du moule.

Cette adaptation est également connue sous le nom de drapage, la surface initiale de la feuille ou dudit ensemble étant plane et correspondant à la surface développée de la partie d'application du moule tandis que la surface finale de la feuille ou dudit ensemble présente tous les reliefs de la partie d'application du moule.

Les aiguilles latéralement déplaçables sont particulièrement utiles lorsque la feuille ou dudit ensemble n'est pas préalablement conformé(e) au relief de la première partie de moule.

Pour préformer la feuille ou ledit ensemble, on peut, selon un mode de mise en oeuvre particulier, déposer celle-ci ou celui-ci sur une grille de forme appropriée et la ou le chauffer, par exemple en l'introduisant dans un four.

Le préformage de la feuille ou dudit ensemble peut en outre être complété ultérieurement, avant sa mise en place dans le moule, par action sur la feuille ou ledit ensemble, action qui est exercée en un poste intermédiaire se trouvant entre le lieu de préhension des feuilles et le moule.

Dans une mise en oeuvre particulière, le moule présente un plan de joint généralement vertical.

Le dispositif de préhension peut être porté par un bras manipulateur qui exerce les efforts mécaniques nécessaires pour l'application de la feuille ou dudit ensemble sur la première partie de moule.

En variante, le dispositif de préhension peut être tiré vers la première partie de moule pour presser la feuille ou ledit ensemble sur celle-ci par un bâti mobile par rapport à la première partie de moule.

Cela permet de soulager le bras manipulateur et d'utiliser un bras manipulateur moins puissant, donc moins coûteux.

Avantageusement, on utilise des butées mobiles par rapport au bâti pour entraîner le dispositif de préhension, ces butées étant disposées pour venir s'engager sur le dispositif de préhension lorsque le bâti est dans une position sortie, puis restant en place lorsque le bâti est déplacé pour tirer sur le dispositif de préhension.

Dans une mise en oeuvre particulière, on surmoule la feuille ou ledit ensemble appliqué(e) contre la première partie de moule, c'est-à-dire qu'on introduit dans le moule une quantité complémentaire de matière plastique afin de remplir toute la cavité du moule, ce remplissage pouvant avoir lieu par dépôt de matière dans le moule ouvert ou par injection de matière dans le moule fermé.

La présente invention a également pour objet un dispositif de préhension pour manipuler une ou plusieurs feuilles.

Ce dispositif comprend au moins un presseur ayant une face frontale conformée comme une région de la première partie de moule, par exemple une portion de sa périphérie ou une zone centrale, et des premières aiguilles traversant ledit presseur, ces aiguilles étant mobiles par rapport au presseur de manière que, dans une première configuration relative du presseur et des aiguilles, les aiguilles comportent une portion d'extrémité dépassant au-delà de la face frontale du presseur, et dans une deuxième configuration relative du presseur et des aiguilles, la même portion d'extrémité des aiguilles se situe en retrait de la face frontale du presseur.

Ce dispositif s'utilise de la manière suivante.

Le ou les presseurs se trouvant dans la première configuration relative par rapport aux aiguilles, on pique la feuille, par exemple sa périphérie, avec la portion d'extrémité des aiguilles dépassant du ou des presseurs.

On amène ensuite la feuille maintenue par les aiguilles en regard de la première partie de moule et l'on rapproche le dispositif du moule de manière à ce que les extrémités des aiguilles arrivent à effleurement d'une région prédéterminée de la première partie de moule, par exemple sa périphérie.

On déplace ensuite le ou les presseurs en direction de la première partie de moule, en maintenant les aiguilles en position par rapport à cette dernière.

Il s'en suit un dévêtissage des aiguilles, la feuille étant seulement maintenue, lorsque les presseurs ont atteint la deuxième configuration relative par rapport aux aiguilles, par compression entre lesdits presseurs et la première partie de moule.

Un système de retenue, qui peut être par exemple constitué par des aiguilles ou par tout autre mécanisme intégré au moule, prend alors le relais des presseurs en maintenant la feuille en position dans le moule, ce qui permet de retirer le dispositif de préhension et de refermer le moule.

On comprend que le dispositif selon l'invention est particulièrement adapté à manipuler une feuille ou un ensemble de feuilles qui doit être positionnée verticalement dans un moule monté sur une presse horizontale.

Dans un mode de réalisation particulier de ce dispositif, d'autres aiguilles, inclinées par rapport aux premières, servent à retenir la feuille lorsque les presseurs se trouvent dans la première configuration relative par rapport aux aiguilles.

Le croisement des deux jeux d'aiguilles immobilise en effet la feuille sur le dispositif, ce qui permet notamment de saisir une feuille sur un plan horizontal.

La présente invention a également pour objet un ensemble pour appliquer une feuille ou un ensemble de feuilles sur une première partie de moule, cet ensemble étant caractérisé par le fait qu'il comporte le dispositif de préhension décrit ci-dessus et un bâti mobile par rapport à la première partie de moule pour tirer le dispositif de préhension vers la première partie de moule et presser la feuille ou ledit ensemble sur celle-ci.

Grâce à cet ensemble, on évite de faire intervenir des moyens mécaniques lourds pour manipuler le dispositif de préhension.

En effet, le bâti peut fournir l'essentiel des efforts nécessaires à l'application de la feuille sur la première partie de moule.

L'ensemble peut comporter des butées mobiles par rapport au bâti, aptes à venir s'engager sur le dispositif de préhension lorsque le bâti est dans une position sortie, puis à entraîner le dispositif de préhension lorsque le bâti est déplacé pour tirer sur le dispositif de préhension.

De préférence, ces butées sont disposées à l'extrémité de bras solidaires du bâti.

Dans une mise en oeuvre particulière, les butées, lorsqu'elles sont engagées sur le dispositif de préhension, prennent appui sur au moins une poutre solidaire du dispositif de préhension et sur laquelle sont disposés des presseurs.

Des presseurs peuvent être fixés sur la ou les poutres en question avec interposition de ressorts.

Avantageusement, le moule présentant une paroi latérale extérieure, le bâti comporte un cadre pouvant coulisser au contact de cette paroi.

Cette disposition du bâti sur la première partie de moule est particulièrement simple à mettre en oeuvre et assure également un déplacement précis du bâti par rapport à la première partie de moule.

De préférence, le dispositif de préhension est solidaire d'un bras manipulateur.

Ce bras manipulateur peut être relâché lorsque le dispositif de préhension est tiré par le bâti vers la première partie de moule.

La présente invention a encore pour objet une chaîne de fabrication de pièces en matière plastique renforcées par surmoulage de feuilles, caractérisée par le fait qu'elle comporte un premier dispositif de préhension tel que décrit ci-dessus et un second dispositif de préhension servant à manipuler des feuilles froides pour, tout d'abord, les amener d'un lieu de stockage à un four où elles sont chauffées, puis du four de chauffage à un poste de préformage où elles sont conformées sensiblement selon le relief du moule, le premier dispositif de préhension assurant le transfert des feuilles chauffées et préformées vers un moule.

Dans une variante avantageuse, le second dispositif de préhension est équipé à la fois d'un système à dépression, qui est adapté à la préhension des feuilles froides pour leur transfert vers le four de chauffage, et d'un système à aiguilles, qui est adapté à la préhension des feuilles chauffées pour leur transfert jusqu'au poste de préformage, puis du poste de préformage au moule.

Dans le but de mieux faire comprendre l'invention, on va en décrire maintenant des modes de mise en oeuvre, donnés à titre d'exemples non limitatifs de la portée de l'invention, en référence au dessin annexé dans lequel :
- la figure 1 est une vue en coupe d'un poinçon d'un moule destiné à réaliser une pièce de forme complexe, et d'une feuille de renforcement plane devant être mise en place sur ce poinçon,
- la figure 2 est une vue en coupe d'un dispositif de préhension à aiguilles au moment où il va saisir la feuille de renforcement,
- la figure 3 est une vue analogue à la figure 2 montrant le dispositif et la feuille en cours de préformage, juste avant dépôt de la feuille de renforcement sur le poinçon,
- la figure 4 est une vue analogue aux figures précédentes montrant la feuille de renforcement dans son état ultime de drapage,
- la figure 5 est une vue en perspective d'un presseur muni d'aiguilles du dispositif des figures 2 à 4,
- la figure 6 est une vue en perspective d'un presseur muni d'un insert gonflable,
- la figure 7 est une vue d'ensemble en perspective d'une chaîne de fabrication de pièces renforcées,
- la figure 8 est une vue en élévation de la moitié d'une poutre de pare-chocs,
- la figure 9 est une vue de dessus de la figure 8, et
- la figure 10 est une vue schématique en perspective d'un ensemble comportant un dispositif de préhension et un bâti mobile par rapport à une première partie de moule.

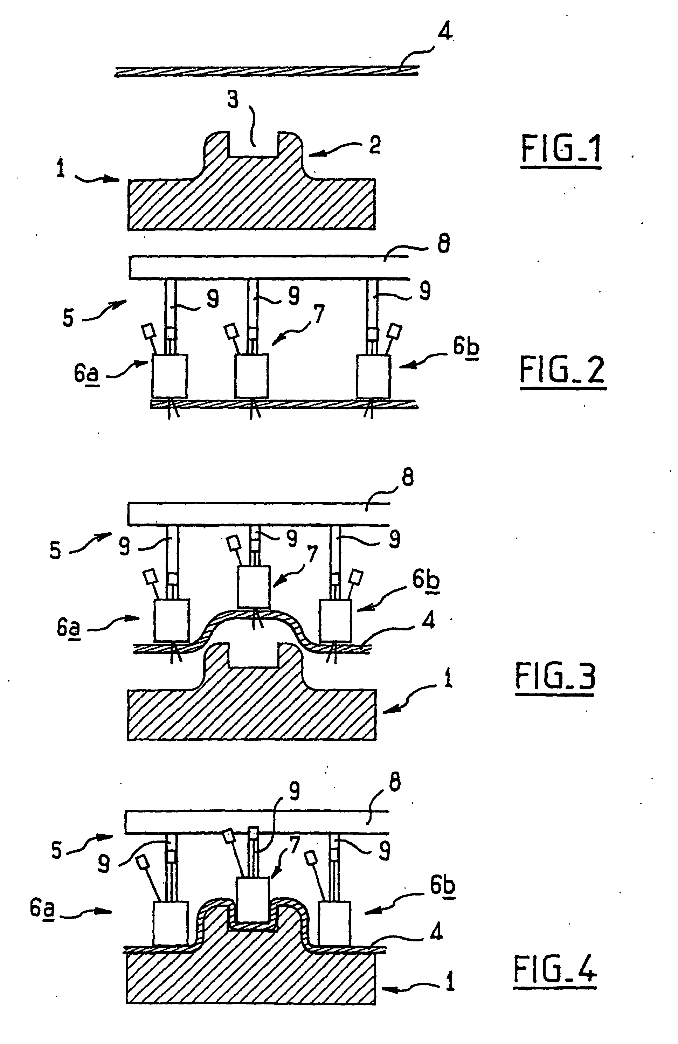

Le poinçon représenté à la figure 1 présente, en section, un relief 2 dans sa partie centrale, ce relief étant lui-même muni d'une rainure 3.

Ce poinçon 1 est destiné à réaliser une poutre de pare-chocs d'un véhicule automobile.

La poutre est réalisée en polypropylène mélangé à des fibres de verre, avec renforcement par une feuille 4 de matière plastique renforcée par des fibres, du genre TWINTEX.

La feuille de TWINTEX est rectangulaire, sa largeur correspondant à la largeur développée du poinçon, qui est constante.

Comme cela sera décrit ultérieurement, la feuille de renforcement 4 est tout d'abord chauffée.

Une fois chauffée, elle est mise en place sur le poinçon grâce à un dispositif de préhension 5 comprenant deux presseurs de positionnement latéraux 6a et 6b et un presseur de drapage central 7, montés sur un rail de glissement 8 par l'intermédiaire de vérins 9.

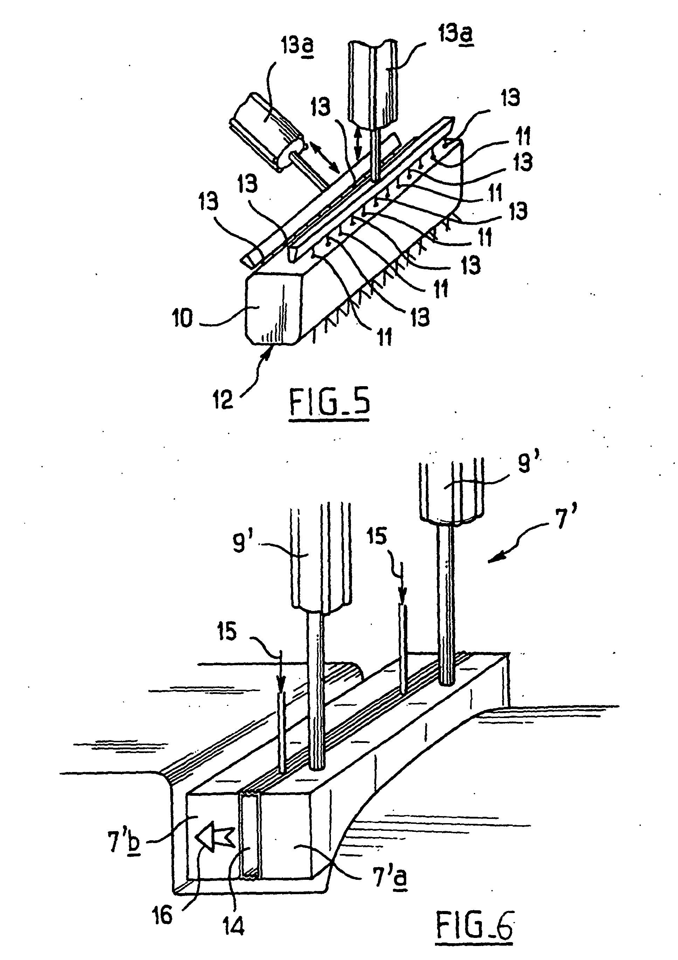

Chacun des presseurs est détaillé sur la figure 5 où les vérins ont été omis par soucis de clarté.

Il se compose d'un bloc allongé 10 muni de deux jeux de perçages traversants 11, le premier jeu étant perpendiculaire au plan de joint du moule, c'est-à-dire à la face frontale 12 du poinçon, et le deuxième jeu étant oblique par rapport au premier jeu.

Chaque jeu de perçages 11 reçoit un jeu d'aiguilles 13 mues par des vérins 13a. Les deux jeux d'aiguilles 13 se croisent au voisinage de la face frontale 12 du presseur, chaque jeu pouvant être coulissé axialement par rapport au presseur.

Comme on le voit à la figure 2, les deux presseurs de positionnement latéraux 6a et 6b et le presseur de drapage central 7 se solidarisent à la feuille de TWINTEX par croisement de leurs deux jeux d'aiguilles 13.

L'un 6b des deux presseurs latéraux (à droite sur le dessin) est ensuite translaté vers le centre du dispositif, tandis que le presseur central 7 est placé au dessus du plan initial de la feuille de TWINTEX, ce qui provoque le préformage de la feuille suivant le relief général du poinçon, comme représenté à la figure 3.

La feuille ainsi grossièrement préformée est ensuite transportée jusqu'au poinçon 1, contre lequel elle est appliquée, d'abord par ses bords qui coïncident avec la périphérie du poinçon, grâce aux presseurs latéraux 6a et 6b, puis par le presseur de drapage central 7 qui plaque la zone centrale de la feuille de TWINTEX contre le fond de la rainure 3

II ne reste alors plus qu'à retirer le dispositif de préhension et à refermer le moule pour surmouler une poutre renforcée, de laquelle aucun bord de la feuille de TWINTEX ne dépasse.

La figure 6 représente une variante du presseur de drapage central 7' qui est ici divisé en deux blocs allongés 7'a et 7'h dont l'un 7'a est solidaire des vérins 9' qui le relient au rail de glissement et l'autre 7'b est lié au premier 7'a par un mécanisme de coulissement transversal (non représenté).

Comme illustré par les flèches 15 et 16 sur la figure 6, le gonflage de l'insert 14 écarte les deux blocs allongés l'un de l'autre et applique fermement la feuille de renforcement contre les parois de la rainure 3 du poinçon.

Il en résulte un drapage optimal de la feuille de renforcement sur le poinçon, les bords de la feuille de renforcement étant par ailleurs convenablement positionnés et maintenus par les presseurs latéraux du dispositif.

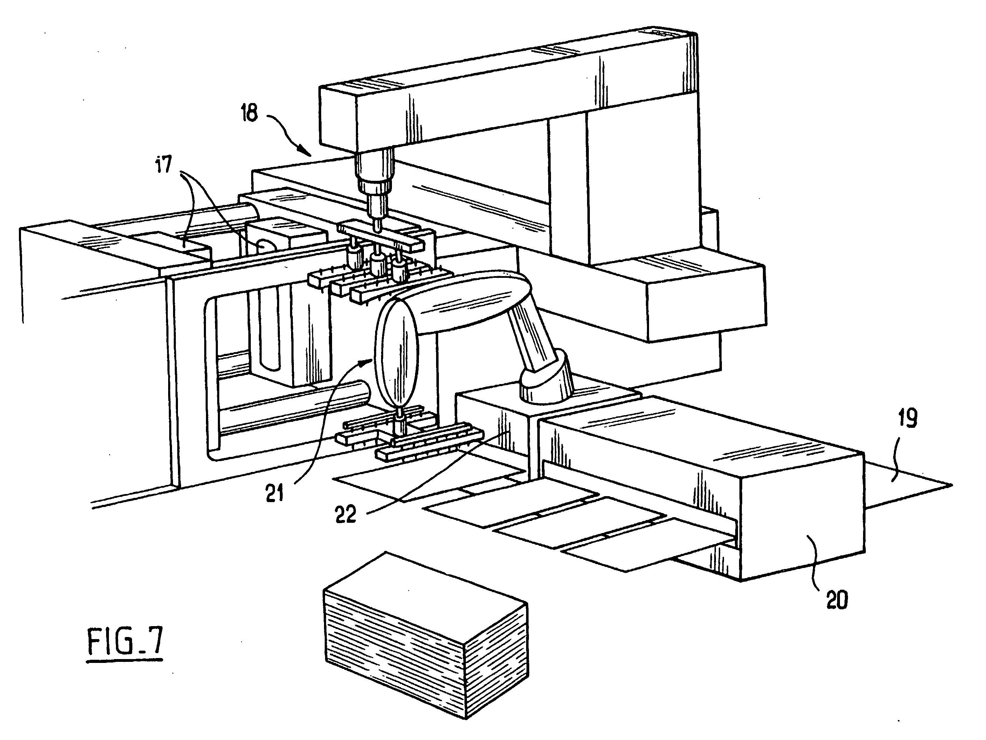

Sur la vue d'ensemble fournie par la figure 7, on voit un moule 17 monté sur une presse horizontale et, à proximité de celui-ci, un dispositif de préhension 18 du type de celui qui vient d'être décrit.

Ce dispositif est monté sur un rail qui lui confère une mobilité suffisante pour s'approcher et s'éloigner du moule 17.

Les feuilles de renforcement prélevées par le dispositif de préhension pour leur préformage et leur mise en place dans le moule ont été chauffées et éventuellement préformées sur des postes antérieurs de la chaîne.

De l'amont vers l'aval, la chaîne de fabrication se compose d'un poste de chargement 19, auquel un opérateur place des feuilles de renforcement froides, un four à infrarouge 20 qui chauffe individuellement chaque feuille de renforcement placée sur le poste de chargement et l'évacue à l'opposé du poste de chargement et un second dispositif 21 de préhension qui saisit les feuilles chauffées et peut les placer en deux endroits différents suivant le type de pièce à réaliser.

Pour les pièces utilisant plusieurs feuilles de renforcement, le second dispositif de préhension 21 empile les feuilles de renforcement sortant du four puis, lorsque leur nombre est suffisant, les place sur une grille de préformage. Les feuilles empilées pour leur préformage sont introduites dans un four à air chaud 22 de manière à les ramener à la température qui était la leur à la sortie du four à infrarouges 20.

Pour les pièces utilisant une seule feuille de renforcement, le second dispositif de préhension 21 met directement les feuilles de renforcement à disposition du premier dispositif de préhension 18, pour leur mise en place immédiate dans le moule 17.

Il convient de noter que le dispositif de préhension 18, constitué par des presseurs à deux jeux d'aiguilles, est particulièrement bien adapté à la manipulation de feuilles de renforcement chauffées de type TWINTEX et à leur manipulation en position verticale, comme c'est le cas dans la chaîne de fabrication de la figure 7.

En effet, d'une part les feuilles chauffées peuvent être facilement piquées, d'autre part la rétention des feuilles chauffées par les aiguilles est facilitée du fait que les aiguilles sont perpendiculaires au plan de la feuille.

De plus, la position verticale de la feuille permet de retirer, d'abord le jeu d'aiguilles obliques au moment de la mise en place de la feuille drapée dans le moule, sans que cette dernière n'échappe au dispositif de préhension.

Une fois les aiguilles obliques retirées, on peut déplacer le ou les presseurs en direction du moule en dévêtissant les aiguilles qui servent alors de guides pour maintenir la feuille de renforcement en position dans le moule.

Ainsi, les aiguilles servent non seulement à la préhension de la feuille mais également à son positionnement précis dans le moule.

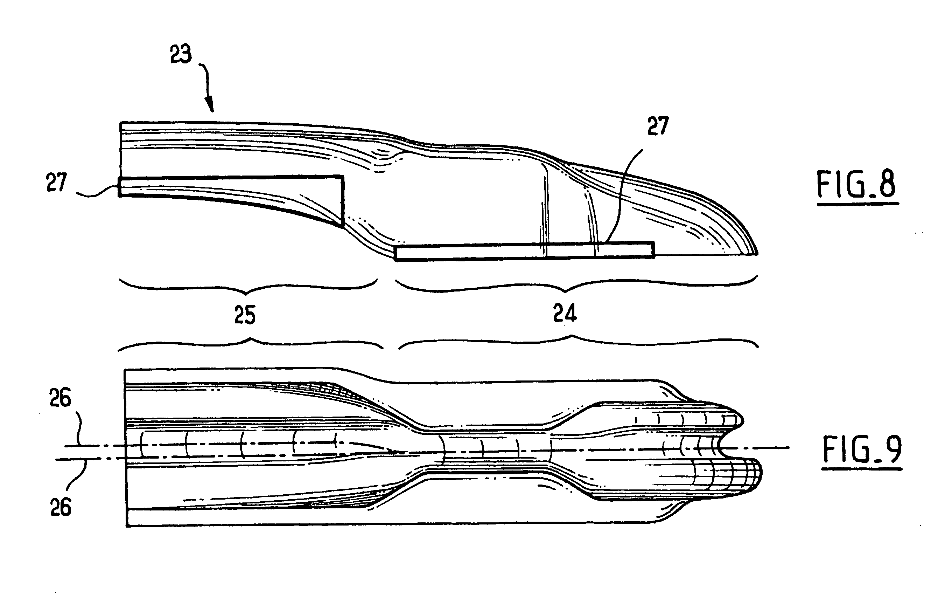

Dans l'exemple des figures 8 et 9, la poutre 23 a une forme symétrique sur une partie 24 de sa longueur et une forme asymétrique sur le reste 25 de sa longueur. La figure 9 montre en effet en traits mixtes des lignes 26 joignant les milieux des largeurs de la poutre avant et après drapage et l'on constate que ces lignes se séparent dans la partie 25 de la poutre.

Cette non coïncidence des milieux des largeurs risquerait de poser un problème de drapage de la feuille de renforcement si ce drapage s'opérait dans cet exemple de réalisation en commençant par le centre de la pièce à réaliser.

En revanche, étant donné que, selon l'exemple de mise en oeuvre de l'invention considéré, le positionnement de la feuille de renforcement s'effectue par ses bords qui sont appliqués en premier lieu contre la périphérie du moule, le drapage de la feuille de renforcement sur un poinçon non symétrique ne soulève aucune difficulté.

C'est pourquoi l'application des presseurs sur les zones 27 marquées en traits forts sur la figure 8 permet d'obtenir la poutre non symétrique des figures 8 et 9.

Il est bien entendu que les exemples de réalisation qui viennent d'être décrits ne présentent aucun caractère limitatif et qu'ils pourront recevoir toutes les modifications désirables sans sortir pour cela du cadre de l'invention.

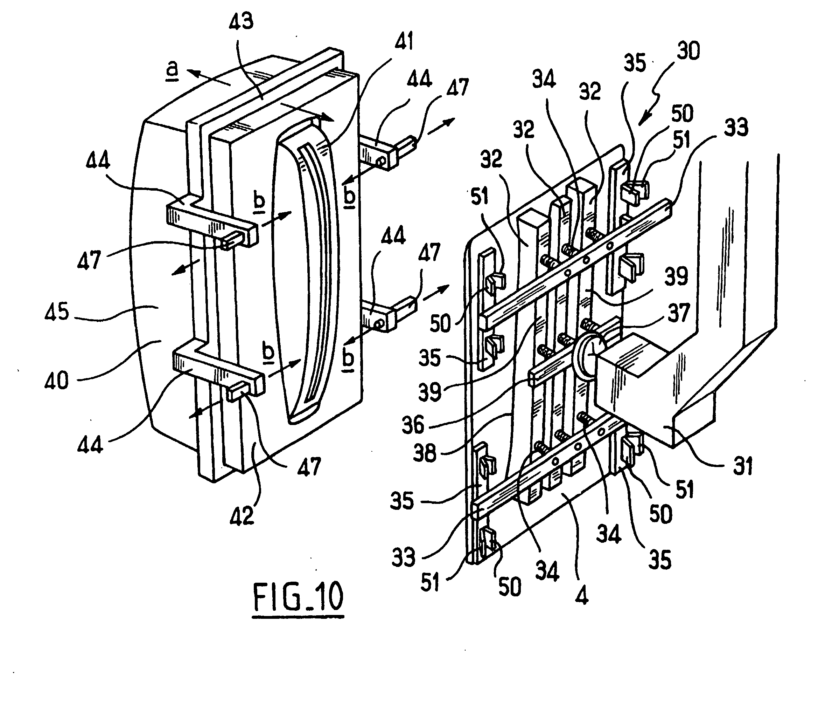

On peut par exemple réaliser comme illustré sur la figure 10 un ensemble destiné à permettre d'utiliser un bras manipulateur moins puissant.

Cet ensemble comprend, outre un dispositif de préhension 30, un bâti 43 mobile par rapport à une première partie de moule 40 et apte à venir tirer le dispositif 30 sur ladite partie de moule pour presser une feuille 4 sur celle-ci.

Le dispositif de préhension 30 est solidaire d'un bras manipulateur 31 et comporte trois presseurs centraux 32 et quatre presseurs périphériques 35 de plus faible longueur que les presseurs centraux 32 et disposés sensiblement aux quatre coins du dispositif de préhension.

Chaque presseur 32 ou 35 présente une face frontale 38 pour appliquer la feuille 4 contre la première partie de moule 40 et une face arrière 39.

Les presseurs 32 et 35 sont supportés par un ensemble de poutres parallèles comprenant une poutre centrale 36 et deux poutres latérales 33 s'étendant sensiblement sur toute la largeur de la feuille 4.

Les presseurs centraux 32 sont fixés sur les poutres 33 et 36 avec interposition de ressorts 34 venant en appui à une extrémité sur les poutres 33 et 36 et à l'autre extrémité sur leurs faces arrière 39.

Les presseurs périphériques 35 peuvent éventuellement se déplacer relativement aux poutres 33 lors du drapage de la feuille 4 sur la partie de moule 40 et sont munis de jeux d'aiguilles droites 50 et inclinées 51, à l'instar des exemples de réalisation précédemment décrits.

Les ressorts 34 permettent aux presseurs 32 de s'adapter à la forme de la première partie de moule 40 lors du serrage du dispositif de préhension 30 contre celle-ci.

En variante, il est possible de remplacer les ressorts 34 par des vérins.

L'utilisation de ressorts présente toutefois l'avantage d'être plus simple et économique que l'utilisation de vérins.

La première partie de moule 40 est apte à coopérer avec une seconde partie de moule ( non représentée) lors de la fermeture du moule, ces deux parties de moule étant montées sur une presse horizontale.

La partie de moule 40 présente un poinçon 41 pourvu d'une rainure centrale et destiné à conformer la feuille 4 de manière à former une poutre pour véhicule automobile.

Elle présente également une surface périphérique plane 42 autour du poinçon 41, servant de surface d'appui aux presseurs périphériques 35.

La partie de moule 40 présente une surface latérale extérieure 45 sur laquelle coulisse le bâti 43, ce dernier étant mobile dans une direction *a*.

Le bâti 43 comporte un cadre rectangulaire sur lequel sont disposés quatre bras 44 dirigés vers la seconde partie de moule.

Les bras 44 comportent chacun une butée 47 mobile dans une direction *b*, perpendiculaire à la direction *a*, chaque butée 47 étant apte à venir en appui sur des faces arrière des poutres 33 lorsque le bâti 43 est dans une position sortie.

On va maintenant décrire les étapes d'une opération de drapage de la feuille 4 sur la première partie de moule 40 au moyen de cet ensemble, le bâti 43 étant initialement dans une position sortie dans laquelle les butées 47 ont été déplacées au maximum en direction de la seconde partie de moule.

Le dispositif de préhension 30 commence par saisir une feuille 4 chaude et la présente devant la première partie de moule 40.

Le dispositif de préhension 30 applique ensuite la feuille 4 contre la première partie de moule 40 en exerçant une légère pression sur la feuille 4, de manière à la maintenir sur ladite partie de moule.

Les presseurs centraux 32 s'engagent sur le poinçon 41 et immobilisent à ce niveau la feuille 4 relativement à la première partie de moule.

La feuille 4 est ainsi mise en référence par rapport à la première partie de moule.

Les butées 47 sont ensuite actionnées de manière à venir en appui sur les faces arrière des poutres 33.

Le bras manipulateur 31 est débrayé, et le bâti 43 est déplacé, à l'aide d'un mécanisme d'entraînement à vérins non représenté, d'une distance prédéterminée en éloignement de la deuxième partie de moule, de manière à tirer sur le dispositif de préhension 30.

Les presseurs centraux 32 maintiennent la feuille 4 appliquée sur le poinçon 41 et immobile par rapport à celui-ci.

Ensuite, les butées 47 sont déplacées vers l'extérieur de la première partie de moule 40, et l'on retire le dispositif de préhension, la feuille 4 étant maintenue plaquée sur la première partie de moule 40 par des moyens de retenue non représentés jusqu'à la fermeture du moule.

L'utilisation du bâti 43 permet d'éviter au bras manipulateur 31 d'avoir à exercer des efforts importants pour plaquer la feuille 4 contre la première partie de moule 40, les efforts nécessaires au serrage du dispositif de préhension 30 sur la première partie de moule 40 étant essentiellement fournis par le déplacement du bâti 43.

## Revendications

1. Procédé de réalisation, dans un moule en au moins deux parties, d'une pièce en matière plastique renforcée à partir d'une feuille renforcée ou d'un ensemble de feuilles comprenant au moins une feuille renforcée, dans lequel on préchauffe la feuille renforcée (4), **caractérisé par le fait qu'**il comprend les étapes suivantes :
- on présente la feuille renforcée ou ledit ensemble devant une première partie (1 ; 40) du moule ouvert au moyen d'un dispositif de préhension (18 ; 30) comportant des presseurs (6a ; 6b ; 7 ; 32 ; 35),
- on applique au moins une région de la feuille renforcée ou dudit ensemble contre une région correspondante de la première partie de moule au moyen de presseurs du dispositif de préhension,
- on applique le reste de sa surface contre le reste de ladite première partie de moule en maintenant immobile ladite région de la feuille renforcée ou dudit ensemble,
- on ferme le moule,
- on démoule la pièce ainsi obtenue.

2. Procédé selon la revendication 1, **caractérisé par le fait que** ladite région correspond à au moins un bord, de préférence aux bords, de la feuille renforcée.

3. Procédé selon la revendication 1, **caractérisé par le fait que** ladite région correspond à une zone centrale de la feuille ou dudit ensemble.

4. Procédé selon l'une quelconque des revendications précédentes, **caractérisé par le fait que** l'on utilise des presseurs (6a ; 6b ; 7) comprenant des cales rigides montées sur des vérins (9).

5. Procédé selon la revendication précédente, **caractérisé par le fait qu'**une cale rigide (7') comprend plusieurs éléments (7'a, 7'b) séparés par des inserts gonflables (14) qui les écartent les uns des autres pour faire en sorte que la cale épouse au mieux la forme de la première partie de moule.

6. Procédé selon l'une quelconque des revendications précédentes, **caractérisé par le fait que** le dispositif de préhension comporte des aiguilles (13).

7. Procédé selon la revendication précédente, **caractérisé par le fait que** les aiguilles (13) sont montées sur un même support que les presseurs (6a ; 6b ; 7).

8. Procédé selon l'une des deux revendications immédiatement précédentes, **caractérisé par le fait que** les aiguilles (13) sont sensiblement parallèles à la direction de fermeture du moule.

9. Procédé selon l'une quelconque des revendications 6 à 8, **caractérisé par le fait que** des aiguilles sont aptes à se déplacer latéralement pour suivre les déformations de la feuille ou dudit ensemble, lorsque cette dernière ou ce dernier adapte sa surface à la surface réelle de la partie d'application du moule.

10. Procédé selon l'une quelconque des revendications précédentes, **caractérisé par le fait que**, préalablement à son transport sur la première partie de moule, on préforme la feuille ou ledit ensemble, en la ou le déposant sur une grille de forme appropriée et en la ou le chauffant.

11. Procédé selon la revendication précédente, **caractérisé par le fait que** l'on complète le préformage de la feuille (4) ou dudit ensemble en un poste intermédiaire se trouvant entre le lieu de préhension des feuilles et le moule.

12. Procédé selon l'une quelconque des revendications précédentes, **caractérisé par le fait que** le moule présente un plan de joint généralement vertical.

13. Procédé selon l'une quelconque des revendications précédentes, **caractérisé par le fait que** le dispositif de préhension est porté par un bras manipulateur (31).

14. Procédé selon l'une quelconque des revendications précédentes, **caractérisé par le fait que** le dispositif de préhension est tiré vers la première partie de moule pour presser la feuille ou ledit ensemble sur celle-ci par un bâti (43) mobile par rapport à la première partie de moule.

15. Procédé selon l'une quelconque des revendications précédentes, **caractérisé par le fait que** l'on surmoule la feuille (4) ou ledit ensemble appliqué(e) contre la première partie de moule, c'est-à-dire qu'on introduit dans le moule une quantité complémentaire de matière plastique afin de remplir toute la cavité du moule, ce remplissage pouvant avoir lieu par dépôt de matière dans le moule ouvert ou par injection de matière dans le moule fermé.

16. Dispositif de préhension, **caractérisé par le fait qu'**il comprend au moins un presseur (6a ; 6b ; 7 ; 32 ; 35) ayant une face frontale conformée comme une région d'une première partie de moule (1 ; 40), par exemple une portion de sa périphérie ou une zone centrale, et des premières aiguilles (13) traversant ledit presseur, ces aiguilles étant mobiles par rapport au presseur, de manière que, dans une première configuration relative du presseur et des aiguilles, les aiguilles comportent une portion d'extrémité dépassant au-delà de la face frontale du presseur, et dans une deuxième configuration relative du presseur et des aiguilles, la même portion d'extrémité des aiguilles se situe en retrait de la face frontale du presseur.

17. Dispositif de préhension selon la revendication précédente, **caractérisé par le fait qu'**il comporte d'autres aiguilles (13), inclinées par rapport aux premières.

18. Ensemble pour appliquer une feuille (4) sur une première partie de moule, **caractérisé par le fait qu'**il comporte un dispositif de préhension (30) selon l'une des revendications 16 et 17 et un bâti (43) mobile par rapport à la première partie de moule (40) pour tirer le dispositif de préhension vers la première partie de moule et presser la feuille ou ledit ensemble sur celle-ci.

19. Ensemble selon la revendication précédente, **caractérisé par le fait qu'**il comporte des butées (47) mobiles par rapport au bâti, aptes à venir s'engager sur le dispositif de préhension lorsque le bâti est dans une position sortie, puis à entraîner le dispositif de préhension lorsque le bâti est déplacé pour tirer sur le dispositif de préhension.

20. Ensemble selon la revendication précédente, **caractérisé par le fait que** les butées (47) sont disposées à l'extrémité de bras (44) solidaires du bâti.

21. Ensemble selon l'une des revendications 19 et 20, **caractérisé par le fait que** les butées, lorsqu'elles sont engagées sur le dispositif de préhension, prennent appui sur au moins une poutre (33) solidaire du dispositif de préhension et sur laquelle sont disposés des presseurs (32 ; 35).

22. Ensemble selon la revendication précédente, **caractérisé par le fait que** des presseurs sont fixés sur la ou les poutres (33) avec interposition de ressorts (34).

23. Ensemble selon l'une quelconque des revendications 18 à 22, le moule présentant une paroi latérale extérieure (45), **caractérisé par le fait que** le bâti comporte un cadre pouvant coulisser au contact de ladite paroi latérale.

24. Ensemble selon l'une quelconque des revendications 18 à 23, **caractérisé par le fait que** le dispositif de préhension est solidaire d'un bras manipulateur (31).

25. Chaîne de fabrication de pièces en matière plastique renforcée par surmoulage de feuilles, **caractérisée par le fait qu'**elle comporte un premier dispositif de préhension (18) selon l'une des revendications 16 et 17 et un second dispositif de préhension (21) servant à manipuler des feuilles froides pour, tout d'abord, les amener d'un lieu de stockage à un four (20) où elles sont chauffées, puis du four de chauffage à un poste de préformage où elles sont conformées sensiblement selon le relief du moule, le premier dispositif de préhension (18) assurant le transfert des feuilles chauffées et préformées vers un moule (17).

26. Chaîne de fabrication selon la revendication précédente, **caractérisée par le fait que** le second dispositif de préhension (21) est équipé à la fois d'un système à dépression, qui est adapté à la préhension des feuilles froides pour leur transfert vers le four de chauffage, et d'un système à aiguilles, qui est adapté à la préhension des feuilles chauffées pour leur transfert jusqu'au poste de préformage, puis du poste de préformage au moule.

## Patentansprüche

1. Verfahren zur Herstellung, in einer mindestens zweiteiligen Form, eines verstärkten Kunststoffteils, das aus einer verstärkten Folie bzw. aus einem mindestens eine verstärkte Folie aufweisenden Folienstapel besteht, bei welchem die verstärkte Folie (4) vorgeheizt wird, **dadurch gekennzeichnet, dass** das Verfahren folgende Schritte aufweist:
- Heranführen der verstärkten Folie bzw. des Folienstapels an einen ersten Teil (1, 40) der geöffneten Form mittels einer Andrückmittel (6a, 6b, 7, 32, 35) aufweisenden Greifvorrichtung (18, 30),
- Andrücken mindestens eines Bereiches der verstärkten Folie bzw. des Folienstapels auf einen entsprechenden Bereich des ersten Formteils mittels der Andrückmittel der Greifvorrichtung,
- Andrücken der verbleibenden Fläche der Folie auf die verbleibende Fläche des ersten Formteils derart, dass der Bereich der verstärkten Folie bzw. des Folienstapels nicht verrutscht,
- Schließen der Form,
- Entformen des auf diese Weise entstandenen Teils.

2. Verfahren nach Anspruch 1, **dadurch gekennzeichnet, dass** der Bereich mindestens einem Rand, vorzugsweise den Rändern, der verstärkten Folie entspricht.

3. Verfahren nach Anspruch 1, **dadurch gekennzeichnet, dass** der Bereich einer Mittelzone der Folie bzw. des Folienstapels entspricht.

4. Verfahren nach einem der vorstehenden Ansprüche, **dadurch gekennzeichnet, dass** Andrückmittel (6a, 6b, 7) verwendet werden, die an Zylindern (9) angebrachte starre Passstücke aufweisen.

5. Verfahren nach dem vorstehenden Anspruch, **dadurch gekennzeichnet, dass** ein starres Passstück (7') mehrere Elemente (7'a, 7'b) umfasst, welche, durch aufblasbare Einsätze (14) getrennt, von diesen im Abstand zueinander gehalten werden, so dass das Passstück so gut wie möglich der Form des ersten Formteils angepasst ist.

6. Verfahren nach einem der vorstehenden Ansprüche, **dadurch gekennzeichnet, dass** die Greifvorrichtung Nadeln (13) aufweist.

7. Verfahren nach dem vorstehenden Anspruch, **dadurch gekennzeichnet, dass** die Nadeln (13) auf dem gleichen Träger wie die Andrückmittel (6a; 6b; 7) angebracht sind.

8. Verfahren nach einem der beiden vorangegangenen Ansprüchen, **dadurch gekennzeichnet, dass** die Nadeln (13) im Wesentlichen parallel zur Schließrichtung der Form verlaufen.

9. Verfahren nach einem der Ansprüche 6 bis 8, **dadurch gekennzeichnet, dass** Nadeln seitlich verschiebbar sind, um sich den Verformungen der Folie bzw. des Folienstapels anzupassen, wenn diese bzw. dieser sich mit seiner Fläche an die reale Fläche des Andrückteils der Form anschmiegt.

10. Verfahren nach einem der vorstehenden Ansprüche, **dadurch gekennzeichnet, dass**, bevor die Folie auf das erste Formteil aufgebracht wird, die Folie bzw. der Folienstapel vorgeformt wird, indem sie bzw. er auf ein entsprechend geformtes Gitter gelegt und geheizt wird.

11. Verfahren nach dem vorangegangenen Anspruch, **dadurch gekennzeichnet, dass** die Folie (4) bzw. der Folienstapel auf einer Zwischenstation zwischen der Stelle, an der die Folien ergriffen werden, und der Form fertig vorgeformt wird.

12. Verfahren nach einem der vorstehenden Ansprüche, **dadurch gekennzeichnet, dass** die Form eine im Allgemeinen senkrechte Teilungsebene aufweist.

13. Verfahren nach einem der vorstehenden Ansprüche, **dadurch gekennzeichnet, dass** die Greifvorrichtung auf einem Manipulatorarm (31) gelagert ist.

14. Verfahren nach einem der vorstehenden Ansprüche, **dadurch gekennzeichnet, dass** die Greifvorrichtung von einem relativ zum ersten Formteil beweglich gelagerten Gestell (43) zum ersten Formteil hin gezogen wird, um die Folie bzw. den Folienstapel auf diesen zu drücken.

15. Verfahren nach einem der vorstehenden Ansprüche, **dadurch gekennzeichnet, dass** die gegen den ersten Formteil gepresste Folie (4) bzw. der gegen den ersten Formteil gepresste Folienstapel abgegossen wird, das heißt, es wird in die Form eine zusätzliche Menge an Kunststoff eingebracht, um den gesamten Formhohlraum auszufüllen, wobei das Ausfüllen der Form durch Einlegen des Kunststoffes in die offene Form oder durch Einspritzen desselben in die geschlossene Form erfolgt.

16. Greifvorrichtung, **dadurch gekennzeichnet, dass** sie mindestens ein Andrückmittel (6a, 6b, 7, 32, 35), dessen Stirnseite als Bereich eines ersten Formteils (1, 40), beispielsweise als Umfangsabschnitt oder als Mittelzone, ausgebildet ist, und erste, durch das Andrückmittel hindurchragende Nadeln (13) umfasst, wobei diese Nadeln relativ zum Andrückmittel beweglich sind, so dass in einer ersten relativen Anordnung des Andrückmittels und der Nadeln zueinander die Nadeln einen Endabschnitt aufweisen, der über die Stirnseite des Andrückmittels vorsteht, und in einer zweiten relativen Anordnung des Andrückmittels und der Nadeln zueinander der gleiche Endabschnitt der Nadeln hinter der Stirnseite des Andrückmittels zurückgesetzt ist.

17. Greifvorrichtung nach dem vorangegangenen Anspruch, **dadurch gekennzeichnet, dass** sie weitere Nadeln (13) aufweist, die im Verhältnis zu den ersten schräg gestellt sind.

18. Einrichtung zum Aufbringen einer Folie (4) auf einen ersten Formteil, **dadurch gekennzeichnet, dass** sie eine Greifvorrichtung (30) nach einem der Ansprüche 16 und 17 sowie ein zum ersten Formteil (40) beweglich geführtes Gestell (43) aufweist, wobei das Gestell dem Heranziehen der Greifvorrichtung an den ersten Formteil und dem Andrücken der Folie bzw. des Folienstapels an diesen dient.

19. Einrichtung nach dem vorangegangenen Anspruch, **dadurch gekennzeichnet, dass** sie zum Gestell beweglich geführte Anschläge (47) aufweist, die in der ausgefahrenen Stellung des Gestells in die Greifvorrichtung in Eingriff bringbar sind und dann die Greifvorrichtung mitnehmen, wenn das Gestell bewegt wird, um die Greifvorrichtung weiterzuziehen.

20. Einrichtung nach dem vorangegangenen Anspruch, **dadurch gekennzeichnet, dass** die Anschläge (47) an das Ende von mit dem Gestell einstückig ausgebildeten Armen (44) angeordnet sind.

21. Einrichtung nach einem der Ansprüche 19 und 20, **dadurch gekennzeichnet, dass** die in der Greifvorrichtung in Eingriff befindlichen Anschläge auf mindestens einem einstückig mit der Greifvorrichtung ausgebildeten Träger (33), auf dem die Andrückmittel (32, 35) angeordnet sind, in Anlage stehen.

22. Einrichtung nach dem vorangegangenen Anspruch, **dadurch gekennzeichnet, dass** die Andrückmittel am Träger, bzw. an den Trägern (33) befestigt sind, wobei Federn (34) dazwischen eingebaut sind.

23. Einrichtung nach einem der Ansprüche 18 bis 22, wobei die Form eine seitliche Außenwand (45) aufweist, **dadurch gekennzeichnet, dass** das Gestell einen Rahmen aufweist, der im Kontakt zur seitlichen Wand verschieblich geführt ist.

24. Einrichtung nach einem der Ansprüche 18 bis 23, **dadurch gekennzeichnet, dass** die Greifvorrichtung einstückig mit einem Manipulatorarm (31) ausgebildet ist.

25. Produktionsstraße zur Herstellung von durch Foliengießen verstärkten Kunststoffteilen, **dadurch gekennzeichnet, dass** sie eine erste Greifvorrichtung (18) nach einem der Ansprüche 16 und 17 und eine zweite Greifvorrichtung (21) zur Handhabung der kalten Folien aufweist, wobei die zweite Greifvorrichtung dazu dient, die Folien zunächst von einem Lagerplatz zu einem Ofen (20), in dem sie aufgeheizt werden, und dann vom Heizofen zu einer Vorformstation, in der sie im Wesentlichen der Form angepasst werden, zu führen, und die erste Greifvorrichtung (18) den Transport der erhitzten und vorgeformten Folien zu einer Form (17) übernimmt.

26. Produktionsstraße nach dem vorangegangenen Anspruch, **dadurch gekennzeichnet, dass** die zweite Greifvorrichtung (21) sowohl mit einem Unterdrucksystem, das die kalten Folien erfasst und sie zum Heizofen transportiert, als auch mit einem Nadelsystem, das die erhitzten Folien erfasst und diese zur Vorformstation und von dort zur Form führt, ausgerüstet ist.

## Claims

1. A method of making a part made of a reinforced plastics material in a mold comprising at least two portions and from a reinforced sheet or from a lay-up of reinforced sheets comprising at least one reinforced sheet, in which method the reinforced sheet (4) is preheated, said method being **characterized by** the fact that it comprises the following steps:
the reinforced sheet or said lay-up of reinforced sheets is presented to a first portion (1; 40) of the open mold by means of a picking-up device (18; 30) including pressers (6a; 6b; 7; 32; 35);
at least a region of the reinforced sheet or of said lay-up is applied against a corresponding region of the first mold portion by means of pressers on the picking-up device;
the remainder of its surface is applied against said first mold portion while holding stationary said region of the reinforced sheet or of said lay-up;
the mold is closed; and
the resulting part is removed from the mold.

2. A method according to claim 1, **characterized by** the fact that said region corresponds to at least one edge, and preferably both edges of the reinforced sheet.

3. A method according to claim 1, **characterized by** the fact that said region corresponds to a central zone of the sheet or of said lay-up.

4. A method according to any preceding claim,. **characterized by** the fact that pressers (6a; 6b; 7) are used that comprise rigid chocks mounted on actuators (9).

5. A method according to any preceding claim, **characterized by** the fact that a rigid chock (7') comprises a plurality of elements (7'a, 7'b) separated by inflatable inserts (14) that space them apart so that the chock hugs the shape of the first mold portion as well as possible.

6. A method according to any preceding claim, **characterized by** the fact that the picking-up device includes needles (13).

7. A method according to the preceding claim, **characterized by** the fact that the needles (13) are mounted on the same support as the pressers (6a; 6b; 7).

8. A method according to either one of the two immediately preceding claims, **characterized by** the fact that the needles (13) are substantially parallel to the direction in which the mold closes.

9. A method according to any one of claims 6 to 8, **characterized by** the fact that needles are suitable for moving sideways to accommodate the deformations of the sheet or of said lay-up, when said sheet or said lay-up adapts its surface to fit the real surface of the application portion of the mold.

10. A method according to any preceding claim, **characterized by** the fact that, prior to conveying it onto the first mold portion, the sheet or said lay-up is pre-formed by depositing it on a rack of suitable shape and by heating it.

11. A method according to the preceding claim, **characterized by** the fact that the pre-forming of the sheet (4) or of said lay-up is supplemented at an intermediate station lying between the place at which the sheets are picked up and the mold.

12. A method according to any preceding claim, **characterized by** the fact that the mold has a join plane that is substantially vertical.

13. A method according to any preceding claim, **characterized by** the fact that the picking-up device is carried by a manipulator arm (31).

14. A method according to any preceding claim, **characterized by** the fact that the picking-up device is pulled towards the first mold portion to press the sheet or said lay-up thereagainst by means of a base (43) mounted to move relative to the first mold portion.

15. A method according to any preceding claim, **characterized by** the fact that the sheet (4) or said lay-up is overmolded as applied against the first mold portion, i.e. a complementary quantity of plastics material is inserted into the mold in order to fill the entire cavity of the mold, it being possible for the filling to take place by depositing material in the open mold or by injecting material into the closed mold.

16. A picking-up device, **characterized by** the fact that it comprises at least one presser (6a; 6b; 7; 32; 35) that has a front face shaped like a region of a first mold portion (1; 40), e.g. a portion of its periphery or a central zone, and first needles (13) passing through said presser, which needles are mounted to move relative to the presser so that, in a first relative configuration of the presser and of the needles, the needles include end portions projecting beyond the front face of the presser, and, in a second relative configuration of the presser and of the needles, the same end portions of the needles are situated set back from the front face of the presser.

17. A picking-up device according to the preceding claim, **characterized by** the fact that it includes other needles (13) that slope relative to the first needles.

18. An assembly for applying a sheet (4) against a first mold portion, **characterized by** the fact that it includes a picking-up device (30) according to claim 16 or 17 and a base (43) mounted to move relative to the first mold portion (40) so as to pull the picking-up device towards the first mold portion and to press the sheet or said lay-up thereagainst.

19. An assembly according to the preceding claim, **characterized by** the fact that it includes abutments (47) mounted to move relative to the base, and suitable for engaging over the picking-up device when the base is in an "out" position, then for entraining the picking-up device when the base is displaced to pull on the picking-up device.

20. An assembly according to the preceding claim, **characterized by** the fact that the abutments (47) are disposed at the ends of arms (44) secured to the base.

21. An assembly according to claim 19 or 20, **characterized by** the fact that, when the abutments (47) are engaged over the picking-up device, they abut against at least one beam (33) that is secured to the picking-up device and on which pressers (32; 35) are disposed.

22. An assembly according to the preceding claim, **characterized by** the fact that pressers are fixed to the beam(s) (33) with springs (34) being interposed.

23. An assembly according to any one of claims 18 to 22, the mold having an outer side wall (45), said assembly being **characterized by** the fact that the base includes a frame that can slide in contact with said side wall.

24. An assembly according to any one of claims 18 to 23, **characterized by** the fact that the picking-up device is secured to a manipulator arm (31).

25. A production line for manufacturing parts made of a plastics material reinforced by overmolding sheets, said production line being **characterized by** the fact that it includes a first picking-up device (18) according to claim 16 or 17, and a second picking up device (21) serving to handle cold sheets so as to bring them firstly from a place of storage to an oven (20) in which they are heated, then from the heating oven to a pre-forming station where they are shaped substantially to match the relief of the mold, the first picking-up device (18) transferring the heated and pre-formed sheets to a mold (17).

26. A production line according the preceding claim, **characterized by** the fact that the second picking-up device (21) is equipped both with a suction system which is suitable for picking-up cold sheets so as to transfer them to the heating oven, and also with a needle system which is suitable for picking up the heated sheets so as to transfer them to the pre-forming station, and then from the pre-forming station to the mold.
